# EUROPÄISCHE PATENTSCHRIFT

(11) **EP 3 797 901 B1**
(45) Veröffentlichungstag und Bekanntmachung des Hinweises auf die Patenterteilung: **08.09.2021**
(21) Anmeldenummer: 19199643.8
(22) Anmeldetag: 25.09.2019
(51) Int. Cl.: B22F 3/10, B22F 3/22, B22F 7/08, B22F 3/11, B22F 3/24, B01J 35/04, B22F 7/00, B22F 7/06, B22F 7/04, B01J 23/755, C25D 1/08, C22C 1/08, B01J 23/883, B01J 23/86, B01J 25/00, B01J 35/00, B01J 37/00, B01J 37/08, B01J 37/34, H01M 4/80, C25D 5/50, C25D 5/56

(54) **METALLSCHAUMKÖRPER UND VERFAHREN ZU SEINER HERSTELLUNG**
METAL FOAM BODY AND METHOD FOR ITS PRODUCTION
CORPS ALVÉOLAIRE MÉTALLIQUE ET SON PROCÉDÉ DE FABRICATION

(43) Veröffentlichungstag der Anmeldung: 31.03.2021
(73) Patentinhaber: Evonik Operations GmbH, 45128 Essen (DE)
(72) Erfinder: POSS, René Dr., 76187 Karlsruhe (DE); BERWEILER, Monika, 63477 Maintal (DE); ROOS, Meike Dr., 63654 Büdingen (DE)
(74) Vertreter: Evonik Patent Association

(56) Entgegenhaltungen:
- CN-A- 102 121 090
- DE-A1-102009 015 176

## Beschreibung

### Hintergrund

Die vorliegende Erfindung betrifft Verfahren zur Herstellung von Formkörpern aus Metall, die das Bereitstellen eines Metallschaumkörpers aus zwei metallischen Komponenten, das anschließende Aufbringen metallhaltiger Pulver, sowie eine abschließende thermische Behandlung zur Legierungsbildung umfassen. Eine geeignete Temperaturführung der thermischen Behandlung und Auswahl der beteiligten Metalle, ermöglicht es die Legierungsbildung auf die oberen Schichten des Metallschaums zu begrenzen, so dass unlegierte Bereiche in zentralen Regionen des Metallschaums verbleiben. Die vorliegende Erfindung betrifft ferner Verfahren, bei denen sich an die thermische Behandlung zur Legierungsbildung eine Behandlung mit einer basischen Lösung anschließt. Entsprechende Verfahren finden unter anderem Anwendung bei der Herstellung von Katalysatoren. Die vorliegende Erfindung betrifft ferner die mit den erfindungsgemäßen Verfahren erhältlichen Metallschaumkörper, die z.B. Anwendung finden als Trag- und Strukturkomponenten sowie in der Katalysatortechnologie.

### Stand der Technik

Verfahren zur Herstellung von Metallschaumkörpern sind aus dem Stand der Technik bekannt, z.B. aus der WO2019057533A1. Dort werden Metallpulver auf schaumförmige Metallkörper aufgetragen und anschließend thermisch behandelt, so dass Legierungen im Kontaktbereich von schaumförmigem Metallkörper und Metallpulver ausgebildet werden. WO2019057533A1 offenbart eine Vielzahl von Metallen und Metallkombinationen, die für den schaumförmige Metallkörper und das Metallpulver gewählt werden können, dazu allgemeine Angaben für die Durchführung der thermischen Behandlung zur Legierungsbildung sowie einige konkrete Beispiele zur Behandlung von Aluminiumpulver auf Nickelschaum. Weitere Verfahren zur Herstellung von Metallschaumkörpern sind aus CN102121090 A und DE102009015176 A1 bekannt.

Das Ausmaß der Legierungsbildung hängt von den Bedingungen der thermischen Behandlung ab: Eine thermische Behandlung bei hohen Temperaturen führt zur Legierungsbildung in tieferen Bereichen des Metallschaums, während eine thermische Behandlung bei niedrigeren Temperaturen nur zur Legierungsbildung in den oberen Bereichen des Metallschaums führt und unlegierte Bereiche im Inneren des Metallschaums verbleiben. Außerdem hat die Auswahl der Metalle des schaumförmigen Metallkörpers und des Metallpulvers einen großen Einfluss auf die Legierungsbildung.

Da das Verbleiben unlegierter Bereiche im Metallschaum für zahlreiche Anwendungen entsprechender Metallschäume von großer Bedeutung ist, besteht ein Bedürfnis an Verfahren, die dies gewährleisten. Die Verfahren der vorliegenden Erfindung erfüllen dieses Bedürfnis.

### Die vorliegende Erfindung

Die Erfindung betrifft ein Verfahren gemäß Anspruch 1 zur Herstellung von Metallschaumkörpern, umfassend die folgenden Schritte:
(a) Bereitstellen eines Metallschaumkörpers A, der aus zwei metallischen Komponenten besteht, wobei diese metallischen Komponenten entweder (i) als Legierung vorliegen können oder (ii) als Anordnung von zwei übereinanderliegenden Schichten der beiden einzelnen metallischen Komponenten, wobei in diesem Falle eine der metallischen Komponenten die innen liegende Schicht des Metallschaums bildet und die andere metallische Komponente die außen liegende Schicht des Metallschaums, wobei bei Alternative (i) die als Legierung vorliegenden metallischen Komponenten ausgewählt werden, aus der Liste der folgenden Kombinationen: Nickel und Cobalt, Nickel und Kupfer,
   wobei bei Alternative (ii), die metallischen Komponenten ausgewählt werden aus der Liste der folgenden Kombinationen: innen Nickel und außen Cobalt, innen Nickel und außen Kupfer, innen Eisen und außen Nickel, und
(b) Aufbringen eines metallhaltigen Pulvers MP auf Metallschaumkörper A, so dass Metallschaumkörper AX erhalten wird,
   wobei das metallhaltige Pulver MP entweder ein Gemisch aus Aluminiumpulver und Chrompulver, oder ein Gemisch aus Aluminiumpulver und Molybdänpulver ist, oder eine pulverförmige Legierung aus entweder Aluminium und Chrom, oder eine pulverförmige Legierung aus Aluminium und Molybdän,
(c) thermische Behandlung von Metallschaumkörper AX, um Legierungsbildung zu erreichen zwischen den metallischen Anteilen von Metallschaumkörper A und dem metallhaltigen Pulver MP, so dass Metallschaumkörper B erhalten wird,
   wobei die höchste Temperatur der thermischen Behandlung von Metallschaumkörper AX im Bereich von 680 bis 715 °C liegt,
   und wobei die Gesamtdauer der thermischen Behandlung im Temperaturbereich von 680 bis 715 °C zwischen 5 und 240 Sekunden liegt.

Experimentelle Ergebnisse, die im Zusammenhang mit der vorliegenden Erfindung erhoben wurden, zeigen, dass die Wahl der Bedingungen für die thermische Behandlung zur Legierungsbildung erheblichen Einfluss auf das Ergebnis hat, insbesondere die Auswahl der Metalle in Metallschaum und Metallpulver und die Temperaturbedingungen. Die erfindungsgemäßen Verfahren erlauben es, bei den genannten Metallkombinationen, die Legierungsbildung auf die oberen Schichten des Metallschaums zu begrenzen, so dass unlegierte Bereiche in zentralen Regionen des Metallschaums verbleiben. Das Vorhandensein dieser unlegierten Bereiche wirkt sich unter anderem auf die chemische und mechanische Stabilität des erhaltenen Metallschaums aus.

Im Zusammenhang mit der vorliegenden Erfindung wird unter Metallschaumkörper A ein schaumförmiger Metallkörper verstanden. Schaumförmige Metallkörper werden z.B. offenbart in Ullmann's Encyclopedia of Industrial Chemistry, Kapitel "Metallic Foams", veröffentlicht online am 15.07.2012, DOI: 10.1002/14356007.c16_c01.pub2. Geeignet sind prinzipiell Metallschäume mit verschiedenen morphologischen Eigenschaften bezüglich Porengröße und -form, Schichtdicke, Flächendichte, geometrische Oberfläche, Porosität, etc. Bevorzugt weist Metallschaum A eine Dichte im Bereich von 400 bis 1500 g/m², eine Porengröße von 400 bis 3000 µm, bevorzugt von 400 bis 800 µm und eine Dicke im Bereich von 0,5 bis 10 mm, bevorzugt von 1,0 bis 5,0 mm auf. Die Herstellung kann in an sich bekannter Weise erfolgen. Beispielsweise kann ein Schaum aus einem organischen Polymer nacheinander oder gleichzeitig mit zwei Metallkomponenten beschichtet werden und dann das Polymer durch Thermolyse entfernt werden, wobei ein Metallschaum erhalten wird. Zum Beschichten mit wenigstens einem ersten Metall oder einem Vorläufer davon kann der Schaum aus dem organischen Polymer mit einer Lösung oder Suspension, die das erste Metall enthält, in Kontakt gebracht werden. Dies kann z. B. durch Sprühen oder Tauchen erfolgen. Möglich ist auch eine Abscheidung mittels chemical vapor deposition (CVD). So kann z. B. ein Polyurethanschaum nacheinander mit zwei Metallen beschichtet und dann der Polyurethanschaum thermolysiert werden. Ein zur Herstellung von Formkörpern in Form eines Schaums geeigneter Polymerschaum hat vorzugsweise eine Porengröße im Bereich von 100 bis 5000 µm, besonders bevorzugt von 450 bis 4000 µm und insbesondere von 450 bis 3000 µm. Ein geeigneter Polymerschaum hat vorzugsweise eine Schichtdicke von 5 bis 60 mm, besonders bevorzugt von 10 bis 30 mm. Ein geeigneter Polymerschaum hat vorzugsweise ein Raumgewicht von 300 bis 1200 kg/m³. Die spezifische Oberfläche liegt vorzugsweise in einem Bereich von 100 bis 20000 m²/m³, besonders bevorzugt 1000 bis 6000 m²/m³. Die Porosität liegt vorzugsweise in einem Bereich von 0,50 bis 0,95.

Die in Schritt (a) des erfindungsgemäßen Verfahrens verwendeten Metallschaumkörper A können jede beliebige Form aufweisen, z.B. kubisch, quaderförmig, zylindrisch etc. Die Metallschaumkörper können aber auch z.B. zu Monolithen verformt sein.

Das Aufbringen des metallhaltigen Pulvers MP in Schritt (b) des erfindungsgemäßen Verfahrens kann in vielfältiger Weise erfolgen, z. B. indem man Metallschaumkörper A mit einer Zusammensetzung des metallhaltigen Pulvers MP durch Rollen oder Tauchen in Kontakt bringt oder eine Zusammensetzung des metallhaltigen Pulvers MP durch Sprühen, Bestreuen oder Gießen aufträgt. Dazu kann die Zusammensetzung des metallhaltigen Pulvers MP als Suspension oder in Form eines Pulvers vorliegen.

Dabei geht bevorzugt dem eigentlichen Aufbringen der Zusammensetzung des metallhaltigen Pulvers MP auf Metallschaumkörper A in Schritt (b) des erfindungsgemäßen Verfahrens ein vorheriges Imprägnieren von Metallschaumkörpers A mit einem Binder voraus. Das Imprägnieren kann beispielweise durch Aufsprühen des Binders oder Eintauchen von Metallschaumkörper A in den Binder erfolgen, ist aber nicht auf diese Möglichkeiten beschränkt. Auf den so vorbereiteten Metallschaumkörper A kann anschließend die Zusammensetzung des metallhaltigen Pulvers MP aufgebracht werden.

Alternativ dazu können Binder und Zusammensetzung des metallhaltigen Pulvers MP in einem Schritt aufgebracht werden. Hierfür wird die Zusammensetzung des metallhaltigen Pulvers MP vor dem Aufbringen entweder in flüssigem Binder selbst suspendiert, oder die Zusammensetzung des metallhaltigen Pulvers MP und der Binder werden in einer Hilfsflüssigkeit F suspendiert.

Der Binder ist eine Zusammensetzung, die sich durch thermische Behandlung im Temperaturbereich von 100 bis 400 °C vollständig in gasförmige Produkte überführen lässt, umfassend eine organische Verbindung, die ein Anhaften der Zusammensetzung des metallhaltigen Pulvers MP auf dem Metallschaumkörper begünstigt. Bevorzugt ist die organische Verbindung dabei ausgewählt aus der folgenden Gruppe: Polyethylenemine (PEI), Polyvinylpyrrolidon (PVP), Ethylenglycol, Gemische dieser Verbindungen. Besonders bevorzugt ist PEI. Das Molekulargewicht des Polyethylenemines liegt vorzugsweise in einem Bereich von 10 000 bis 1 300 000 g/mol. Das Molekulargewicht des Polyethylenemines (PEI) liegt vorzugsweise in einem Bereich von 700.000 bis 800.000 g/mol.

Hilfsflüssigkeit F muss geeignet sein, um die Zusammensetzung des metallhaltigen Pulvers MP und den Binder zu suspendieren und sich durch thermische Behandlung im Temperaturbereich von 100 bis 400 °C vollständig in gasförmige Produkte überführen lassen. Bevorzugt wird Hilfsflüssigkeit F ausgewählt aus der folgenden Gruppe: Wasser, Ethylenglycol, PVP und Gemische dieser Verbindungen. Typischerweise wird, wenn Hilfsflüssigkeit verwendet wird, der Binder mit einer Konzentration im Bereich von 1 bis 10 Gew% in Wasser suspendiert, anschließend wird in dieser Suspension die Zusammensetzung des metallhaltigen Pulvers MP suspendiert.

Das in Schritt (b) des erfindungsgemäßen Verfahrens verwendete metallhaltige Pulver MP kann neben pulverförmigen Metallkomponenten auch Zusätze, die zur Steigerung der Rieselfähigkeit oder Wasserbeständigkeit beitragen, enthalten. Derartige Zusätze müssen sich durch thermische Behandlung im Temperaturbereich von 100 bis 400 °C vollständig in gasförmige Produkte überführen lassen. Das in Schritt (b) des erfindungsgemäßen Verfahrens verwendete metallhaltige Pulver MP umfasst eine oder mehr pulverförmige Metallkomponenten, ausgewählt aus der folgenden Gruppe: Gemische aus Aluminiumpulver und Chrompulver, Gemische aus Aluminiumpulver und Molybdänpulver, pulverförmige Legierung aus Aluminium und Chrom, pulverförmige Legierung aus Aluminium und Molybdän. Vorzugsweise umfasst das in Schritt (b) des erfindungsgemäßen Verfahrens verwendete metallhaltige Pulver MP als einzige Metallkomponente entweder (i) ein Gemisch aus Aluminiumpulver und Chrompulver, oder (ii) eine pulverförmige Legierung aus Aluminium und Chrom. Besonders bevorzugt umfasst das in Schritt (b) des erfindungsgemäßen Verfahrens verwendete metallhaltige Pulver MP als einzige Metallkomponente eine pulverförmige Legierung aus Aluminium und Chrom.

Die Zusammensetzung des metallhaltigen Pulvers MP weist bevorzugt einen Metallkomponentengehalt im Bereich von 80 bis 99,8 Gew% auf. Bevorzugt sind dabei Zusammensetzungen, bei denen die Metallkomponentenpartikel eine Teilchengröße von nicht kleiner 5 µm und nicht größer 200 µm aufweisen. Besonders bevorzugt sind Zusammensetzungen bei denen 95 % der Metallkomponentenpartikel eine Teilchengröße von nicht kleiner 5 µm und nicht größer 75 µm aufweisen. Es kann sein, dass die Zusammensetzung neben der Metallkomponente in elementarer Form, noch Metallkomponente in oxidierter Form enthält. Dieser oxidierte Anteil liegt üblicherweise in Form von oxidischen Verbindungen wie z.B. Oxiden, Hydroxiden und/oder Carbonaten vor. Typischerweise liegt der Masseanteil des oxidierten Anteils im Bereich von 0,05 bis 10 Gew.-% der Gesamtmasse der Metallpulver-Zusammensetzung.

In Schritt (c) des erfindungsgemäßen Verfahrens erfolgt eine thermische Behandlung, um das Ausbilden einer oder mehrerer Legierungen zu erreichen.
Experimentelle Ergebnisse, die im Zusammenhang mit der vorliegenden Erfindung erhoben wurden zeigen, dass die Auswahl der Metalle in Metallschaumkörper A und metallhaltigem Pulver MP erheblichen Einfluss auf den Verlauf der Legierungsbildung hat. Außerdem zeigen die Ergebnisse, dass eine relativ strikte Temperaturkontrolle notwendig ist, um die Legierungsbildung auf die oberen Bereiche des Metallschaums zu beschränken und unlegierte Bereiche im Inneren des Metallschaums zu belassen.

In Schritt (c) des erfindungsgemäßen Verfahrens wird Metallschaumkörper AX thermisch behandelt, um Legierungsbildung zu erreichen zwischen den metallischen Anteilen von Metallschaumkörper A und dem metallhaltigen Pulver MP, so dass Metallschaumkörper B erhalten wird, wobei die höchste Temperatur der thermischen Behandlung von Metallschaumkörper AX im Bereich von 680 bis 715 °C liegt, und wobei die Gesamtdauer der thermischen Behandlung im Temperaturbereich von 680 bis 715 °C zwischen 5 und 240 Sekunden liegt.

Die thermische Behandlung umfasst das, üblicherweise stufenweise, Aufheizen des Metallschaumkörpers AX und das anschließende Abkühlen auf Raumtemperatur. Die thermische Behandlung findet unter Inertgas oder unter reduktiven Bedingungen statt. Unter reduktiven Bedingungen ist die Gegenwart eines Gasgemisches, das Wasserstoff und wenigstens ein unter den Reaktionsbedingungen inertes Gas enthält zu verstehen, geeignet ist z. B. ein Gasgemisch, das 50 Vol% N₂ und 50 Vol% H₂ enthält. Als inertes Gas wird vorzugsweise Stickstoff eingesetzt. Das Aufheizen kann z. B. in einem Bandofen erfolgen. Geeignete Aufheizraten liegen im Bereich von 10 bis 200 K/min, bevorzugt 20 bis 180 K/min. Während der thermischen Behandlung wird typischerweise zunächst die Temperatur von Raumtemperatur auf etwa 300 bis 400 °C erhöht und bei dieser Temperatur für einen Zeitraum von etwa 2 bis 30 Minuten Feuchtigkeit, und organische Bestandteile aus der Beschichtung entfernt, anschließend wird die Temperatur bis in den Bereich von 680 bis 715 °C erhöht, und es erfolgt Legierungsbildung zwischen metallischen Anteilen von Metallschaumkörper AX und der Zusammensetzung des metallhaltigen Pulvers MP, anschließend wird durch Kontakt mit Schutzgasumgebung einer Temperatur von ca. 200 °C der Metallschaumkörper abgeschreckt.

Um bei den erfindungsgemäß beteiligten Metallen die Legierungsbildung auf die oberen Bereiche des Metallschaums zu beschränken, und unlegierte Bereiche im Inneren des Metallschaums zu belassen, ist es notwendig, dass die höchste Temperatur der thermischen Behandlung von Metallschaumkörper AX in Schritt (c) im Bereich von 680 bis 715 °C liegt, und dass außerdem die Gesamtdauer der thermischen Behandlung im Temperaturbereich von 680 bis 715 °C zwischen 5 und 240 Sekunden liegt. Bis zu einem gewissen Grad kann zwar die Dauer der thermischen Behandlung die Höhe der höchsten Behandlungstemperatur ausgleichen und umgekehrt, es wird jedoch festgestellt, dass die Häufigkeit der Experimente, bei denen eine Legierungsbildung im oberen Bereich des Metallschaums bei gleichzeitigem Verbleib unlegierter Bereiche im inneren des Metallschaums erreicht wird, stark abnimmt, wenn bei der Höchsttemperatur der thermischen Behandlung das Temperaturintervall zwischen 680 und 715 °C verlassen wird und/oder die Dauer der thermischen Behandlung im Temperaturintervall zwischen 680 und 715 °C außerhalb des Bereichs von 5 bis 240 Sekunden liegt. Eine zu hohe Höchsttemperatur und/oder ein zu langes Verbleiben des Metallschaumkörpers im Bereich der Höchsttemperatur, führen dazu, dass die Legierungsbildung bis in die tiefsten Schichten des Metallschaums fortschreitet und keine unlegierten Bereiche verbleiben. Eine zu niedrige Höchsttemperatur und/oder ein zu kurzes Verbleiben des Metallschaumkörpers im Bereich der Höchsttemperatur, führen dazu, dass die Legierungsbildung gar nicht beginnt. Eine Auswahl anderer, als der erfindungsgemäß beteiligten Metalle für Metallschaumkörper A und metallhaltigem Pulver MP, kann ebenfalls dazu führen, dass trotz einer thermischen Behandlung im Temperaturintervall zwischen 680 und 715 °C für eine Dauer von 5 bis 240 Sekunden entweder gar keine Legierungsbildung erhalten wird, oder keine unlegierten Bereiche im Innern des Schaums verbleiben.

In einer bevorzugten Ausführungsform liegt das Massenverhältnis der beiden metallischen Komponenten in Metallschaumkörper A im Bereich von 1:1 bis 20:1, außerdem das Verhältnis der Masse des Aluminiums zur Masse aller anderen metallischen Komponenten im metallhaltigen Pulver MP im Bereich von 4:1 bis 50:1, und außerdem das Verhältnis V der Massen von Metallschaumkörper B zu Metallschaumkörper A, V = m(Metallschaumkörper B) / m(Metallschaumkörper A) im Bereich von 1.1:1 bis 1.5:1.

In einer weiteren bevorzugten Ausführungsform liegt das Massenverhältnis der beiden metallischen Komponenten in Metallschaumkörper A im Bereich von 1:1 bis 10:1, außerdem das Verhältnis der Masse des Aluminiums zur Masse aller anderen metallischen Komponenten im metallhaltigen Pulver MP im Bereich von 10:1 bis 20:1, und außerdem das Verhältnis V der Massen von Metallschaumkörper B zu Metallschaumkörper A, V = m(Metallschaumkörper B) / m(Metallschaumkörper A) im Bereich von 1.2:1 bis 1.4:1.

In einem weiteren Aspekt umfasst die vorliegende Erfindung ferner Verfahren mit dem folgenden Schritt (d): Behandlung des Metallschaumkörpers B mit einer basischen Lösung. Die Behandlung des Metallschaumkörpers B mit einer basischen Lösung kann dazu dienen Metallkomponenten der aufgebrachten Zusammensetzung des metallhaltigen Pulvers MP sowie Legierungen zwischen metallischen Anteilen von Metallschaumkörper und der Zusammensetzung des metallhaltigen Pulvers MP zumindest teilweise aufzulösen und auf diese Weise aus dem Metallschaumkörper zu entfernen. Typischerweise wird aus den Metallschaumkörpern durch die Behandlung mit basischer Lösung 30 bis 70 Gew% der Gesamtmasse der Metallkomponenten der aufgebrachten Zusammensetzung des metallhaltigen Pulvers MP sowie der Legierungen zwischen metallischen Anteilen von Metallschaumkörper und Zusammensetzung des metallhaltigen Pulvers MP entfernt. Als basische Lösungen werden typischerweise wässrige basische Lösungen von NaOH, KOH, LiOH oder Gemischen davon verwendet. Die Temperatur bei der basischen Behandlung wird üblicherweise im Bereich von 25 bis 120 °C gehalten. Die Dauer der Behandlung mit basischer Lösung liegt typischerweise im Bereich von 5 Minuten bis 8 Stunden. Bei geeigneter Wahl der metallischen Komponenten können Metallschaumkörper, die als Ergebnis der Behandlung mit basischer Lösung erhalten werden, als Katalysatoren eingesetzt werden, wie z.B. offenbart in der WO2019057533A1.

In einer bevorzugten Ausführungsform wird die Behandlung des Metallschaumkörpers B mit einer basischen Lösung für eine Dauer im Bereich von 5 Minuten bis 8 Stunden, bei einer Temperatur im Bereich von 20 bis 120 °C ausgeführt, wobei die basische Lösung eine wässrige NaOH-Lösung mit einer NaOH-Konzentration zwischen 2 und 30 Gew% ist.

In einem weiteren Aspekt umfasst die vorliegende Erfindung ferner beschichtete Metallschaumkörper gemäß Anspruch 10 oder 11.

In einer weiteren bevorzugten Ausführungsform betrifft die vorliegende Erfindung ferner Verfahren sowie die dadurch erhältlichen Metallschaumkörper,
bei denen in Metallschaumkörper A die beiden metallischen Komponenten als Anordnung von zwei übereinanderliegenden Schichten einzelner Metalle vorliegen, und wobei Nickel die innere Schicht und Cobalt die äußere Schicht bildet,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen in Metallschaumkörper A Nickel und Cobalt als Legierung vorliegen,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen das in Schritt (b) verwendete metallhaltige Pulver MP als einzige Metallkomponente entweder
(i) ein Gemisch aus Aluminiumpulver und Chrompulver, oder
(ii) eine pulverförmige Legierung aus Aluminium und Chrom umfasst,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen das in Schritt (b) verwendete metallhaltige Pulver MP als einzige Metallkomponente eine pulverförmige Legierung aus Aluminium und Chrom umfasst,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen in Metallschaumkörper A die beiden metallischen Komponenten als Anordnung von zwei übereinanderliegenden Schichten einzelner Metalle vorliegen, und wobei Nickel die innere Schicht und Cobalt die äußere Schicht bildet,
und bei denen das in Schritt (b) verwendete metallhaltige Pulver MP als einzige Metallkomponente entweder
(i) ein Gemisch aus Aluminiumpulver und Chrompulver, oder
(ii) eine pulverförmige Legierung aus Aluminium und Chrom umfasst.

In einer weiteren bevorzugten Ausführungsform betrifft die vorliegende Erfindung ferner Verfahren sowie die dadurch erhältlichen Metallschaumkörper,
bei denen in Metallschaumkörper A die beiden metallischen Komponenten als Anordnung von zwei übereinanderliegenden Schichten einzelner Metalle vorliegen, und wobei Nickel die innere Schicht und Cobalt die äußere Schicht bildet,
und bei denen das in Schritt (b) verwendete metallhaltige Pulver MP als einzige Metallkomponente entweder
(i) ein Gemisch aus Aluminiumpulver und Chrompulver, oder
(ii) eine pulverförmige Legierung aus Aluminium und Chrom
umfasst,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen in Metallschaumkörper A die beiden metallischen Komponenten als Anordnung von zwei übereinanderliegenden Schichten einzelner Metalle vorliegen, und wobei Nickel die innere Schicht und Cobalt die äußere Schicht bildet,
und bei denen das in Schritt (b) verwendete metallhaltige Pulver MP als einzige Metallkomponente eine pulverförmige Legierung aus Aluminium und Chrom umfasst.

In einer weiteren bevorzugten Ausführungsform betrifft die vorliegende Erfindung ferner Verfahren sowie die dadurch erhältlichen Metallschaumkörper,
bei denen in Metallschaumkörper A die beiden metallischen Komponenten als Anordnung von zwei übereinanderliegenden Schichten einzelner Metalle vorliegen, und wobei Nickel die innere Schicht und Cobalt die äußere Schicht bildet,
und bei denen das in Schritt (b) verwendete metallhaltige Pulver MP als einzige Metallkomponente eine pulverförmige Legierung aus Aluminium und Chrom umfasst,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen in Metallschaumkörper A Nickel und Cobalt als Legierung vorliegen,
und bei denen das in Schritt (b) verwendete metallhaltige Pulver MP als einzige Metallkomponente entweder
(i) ein Gemisch aus Aluminiumpulver und Chrompulver, oder
(ii) eine pulverförmige Legierung aus Aluminium und Chrom umfasst.

In einer weiteren bevorzugten Ausführungsform betrifft die vorliegende Erfindung ferner Verfahren sowie die dadurch erhältlichen Metallschaumkörper,
bei denen in Metallschaumkörper A Nickel und Cobalt als Legierung vorliegen,
und bei denen das in Schritt (b) verwendete metallhaltige Pulver MP als einzige Metallkomponente entweder
(i) ein Gemisch aus Aluminiumpulver und Chrompulver, oder
(ii) eine pulverförmige Legierung aus Aluminium und Chrom
umfasst,
und bei denen in Schritt (d) Metallschaumkörper B mit einer basischen Lösung behandelt wird.

In einer weiteren bevorzugten Ausführungsform betrifft die vorliegende Erfindung ferner Verfahren sowie die dadurch erhältlichen Metallschaumkörper,
bei denen in Metallschaumkörper A Nickel und Cobalt als Legierung vorliegen,
und bei denen das in Schritt (b) verwendete metallhaltige Pulver MP als einzige Metallkomponente eine pulverförmige Legierung aus Aluminium und Chrom umfasst.

In einer weiteren bevorzugten Ausführungsform betrifft die vorliegende Erfindung ferner Verfahren sowie die dadurch erhältlichen Metallschaumkörper,
bei denen in Metallschaumkörper A Nickel und Cobalt als Legierung vorliegen,
und bei denen das in Schritt (b) verwendete metallhaltige Pulver MP als einzige Metallkomponente eine pulverförmige Legierung aus Aluminium und Chrom umfasst,
und bei denen in Schritt (d) Metallschaumkörper B mit einer basischen Lösung behandelt wird.

### Beispiele

### 1. Bereitstellen von Metallschaumkörpern

Es wurden drei Metallschaumkörper (a, b, c) aus einer Cobalt-Nickel-Legierung bereitgestellt (Co/Ni = 9:1), (Hersteller: AATM, Abmessungen: 220 mm x 180 mm x 1,6 mm, Flächengewicht: 1000 g/m², durchschnittlicher Porendurchmesser:580 µm), die durch gleichzeitiges galvanisches Abscheiden von Nickel und Cobalt auf einem Polyurethanschaum and anschließende Thermolyse der Kunststoffanteile hergestellt worden waren.

### 2. Aufbringen metallhaltiger Pulver

Anschließend wurde auf alle Metallschaumkörper zunächst Binderlösung aufgesprüht (Polyethyleneimine (2,5 Gew%) in Wasser) und dann eine pulverförmige Aluminium-Chrom Legierung (Hersteller: AMG, durchschnittliche Korngröße: < 63 µm, Al/Cr = 70/30, mit 3 Gew% Zusatz von Ethylene bis(stearamide)) als trockenes Pulver aufgebracht (ca. 400 g/m²).

### 3. Thermische Behandlung

Danach wurden alle Metallschaumkörper in einem Ofen unter Stickstoff-Atmosphäre einer thermischen Behandlung unterzogen. Dabei wurde zunächst in ca. 15 min von Raumtemperatur auf die Höchsttemperatur aufgeheizt, diese wurde für einen definierten Zeitraum gehalten und anschließend durch Kontaktieren mit Stickstoff-Atmosphäre von 200 °C abgeschreckt.

Höchsttemperatur für Metallschaumkörper a:
700 °C für 2 Minuten

Temperaturverlauf Metallschaumkörper b:
600 °C für 2 Minuten

Temperaturverlauf Metallschaumkörper c:
750 °C für 2 Minuten

### 4. Bestimmung des Legierungsausmaßes

Am Ende wurde das Ausmaß der Legierungsbildung in den Metallschaumkörpern bestimmt. Dazu wurden Querschliffe der Metallschaumkörper unter Mikroskop und Rasterelektronenmikroskop untersucht.

Dabei ergab sich folgendes Ergebnis:
Während bei Metallschaumkörper a oberflächliche Legierungsbildung stattgefunden hat, aber unlegierte Bereiche im Inneren des Metallschaums verblieben sind, hat bei Metallschaumkörper b keine Legierungsbildung stattgefunden, und bei Metallschaumkörper c ist die Legierungsbildung so weit fortgeschritten, dass keine unlegierten Bereiche im Inneren des Metallschaums verblieben sind.

Dieses Ergebnis zeigt deutlich, dass ein Abweichen von den erfindungsgemäßen Bedingungen der thermischen Behandlung dazu führt, dass eine oberflächliche Legierungsbildung unter Verbleib unlegierter Bereiche im Inneren des Metallschaums schwer erreichbar wird.

## Patentansprüche

1. Verfahren zur Herstellung eines Metallschaumkörpers umfassend die folgenden Schritte:
(a) Bereitstellen eines Metallschaumkörpers A, der aus zwei metallischen Komponenten besteht, wobei diese metallischen Komponenten entweder (i) als Legierung vorliegen können oder (ii) als Anordnung von zwei übereinanderliegenden Schichten der beiden einzelnen metallischen Komponenten, wobei in diesem Falle eine der metallischen Komponenten die innen liegende Schicht des Metallschaums bildet und die andere metallische Komponente die außen liegende Schicht des Metallschaums
wobei bei Alternative (i) die als Legierung vorliegenden metallischen Komponenten ausgewählt werden, aus der Liste der folgenden Kombinationen: Nickel und Cobalt, Nickel und Kupfer,
wobei bei Alternative (ii), die metallischen Komponenten ausgewählt werden aus der Liste der folgenden Kombinationen: innen Nickel und außen Cobalt, innen Nickel und außen Kupfer, innen Eisen und außen Nickel, und
(b) Aufbringen eines metallhaltigen Pulvers MP auf Metallschaumkörper A, so dass Metallschaumkörper AX erhalten wird,
wobei das metallhaltige Pulver MP entweder ein Gemisch aus Aluminiumpulver und Chrompulver, oder ein Gemisch aus Aluminiumpulver und Molybdänpulver ist, oder eine pulverförmige Legierung aus entweder Aluminium und Chrom, oder eine pulverförmige Legierung aus Aluminium und Molybdän,
(c) thermische Behandlung von Metallschaumkörper AX, um Legierungsbildung zu erreichen zwischen den metallischen Anteilen von Metallschaumkörper A und dem metallhaltigen Pulver MP, so dass Metallschaumkörper B erhalten wird,
wobei die höchste Temperatur der thermischen Behandlung von Metallschaumkörper AX im Bereich von 680 bis 715 °C liegt,
und wobei die Gesamtdauer der thermischen Behandlung im Temperaturbereich von 680 bis 715 °C zwischen 5 und 240 Sekunden liegt.

2. Verfahren gemäß Anspruch 1, wobei in Metallschaumkörper A die beiden metallischen Komponenten als Anordnung von zwei übereinanderliegenden Schichten einzelner Metalle vorliegen, und wobei Nickel die innere Schicht und Cobalt die äußere Schicht bildet.

3. Verfahren gemäß einem der Ansprüche 1 bis 2, wobei in Metallschaumkörper A Nickel und Cobalt als Legierung vorliegen.

4. Verfahren gemäß einem der Ansprüche 1 bis 3, wobei das in Schritt (b) verwendete metallhaltige Pulver MP entweder
(iii) ein Gemisch aus Aluminiumpulver und Chrompulver, oder
(iv) eine pulverförmige Legierung aus Aluminium und Chrom umfasst.

5. Verfahren gemäß einem der Ansprüche 1 bis 4, wobei das in Schritt (b) verwendete metallhaltige Pulver MP eine pulverförmige Legierung aus Aluminium und Chrom umfasst.

6. Verfahren gemäß einem der Ansprüche 1 bis 5, wobei der in Schritt (a) verwendete Metallschaumkörper A erhalten wurde, durch entweder zwei aufeinanderfolgende galvanische Abscheideschritte, bei denen jeweils eine einzelne metallische Komponente auf einem Substrat abgeschieden wird, oder durch einen einzelnen galvanischen Abscheideschritt, bei dem zwei metallische Komponenten gleichzeitig auf einem Substrat abgeschieden werden, wobei nach dem Abschluss aller galvanischer Abscheideschritte das Substrat durch Thermolyse entfernt wird.

7. Verfahren gemäß einem der Ansprüche 1 bis 6, wobei das Massenverhältnis der beiden metallischen Komponenten in Metallschaumkörper A im Bereich von 1:1 bis 20:1 liegt,
wobei ferner das Verhältnis der Masse des Aluminiums zur Masse des Chroms bzw. des Molybdäns im metallhaltigen Pulver MP im Bereich von 4:1 bis 50:1 liegt,
und wobei das Verhältnis V der Massen von Metallschaumkörper B zu Metallschaumkörper A V = m(Metallschaumkörper B) / m(Metallschaumkörper A) im Bereich von 1.1:1 bis 1.5:1 liegt.

8. Verfahren gemäß einem der Ansprüche 1 bis 7, ferner umfassend den folgenden Schritt:
(d) Behandlung des Metallschaumkörpers B mit einer basischen Lösung.

9. Verfahren gemäß Anspruch 8, wobei die Behandlung des Metallschaumkörpers B mit einer basischen Lösung für eine Dauer im Bereich von 5 Minuten bis 8 Stunden, bei einer Temperatur im Bereich von 20 bis 120 °C ausgeführt wird, und wobei die basische Lösung eine wässrige NaOH-Lösung mit einer NaOH-Konzentration zwischen 2 und 30 Gew% ist.

10. Metallschaumkörper erhältlich nach einem Verfahren gemäß einem der Ansprüche 1 bis 7.

11. Metallschaumkörper erhältlich nach einem Verfahren gemäß einem der Ansprüche 8 bis 9.

## Claims

1. Process for producing a metal foam body, comprising the following steps:
(a) providing a metal foam body A consisting of two metallic components, where these metallic components may be in the form either of (i) an alloy or (ii) an arrangement of two superposed layers of the two individual metallic components, in which case one of the metallic components forms the inner layer of the metal foam and the other metallic component the outer layer of the metal foam,
wherein, in the case of alternative (i), the metallic components in the form of an alloy are selected from the list of the following combinations: nickel and cobalt, nickel and copper,
wherein, in the case of alternative (ii), the metallic components are selected from the list of the following combinations: nickel on the inside and cobalt on the outside, nickel on the inside and copper on the outside, iron on the inside and nickel on the outside, and
(b) applying a metal-containing powder MP to metal foam body A so as to obtain metal foam body AX,
wherein the metal-containing powder MP is either a mixture of aluminium powder and chromium powder or a mixture of aluminium powder and molybdenum powder or a pulverulent alloy composed of either aluminium and chromium, or a pulverulent alloy composed of aluminium and molybdenum,
(c) treating metal foam body AX thermally in order to achieve alloy formation between the metallic components of metal foam body A and the metal-containing powder MP so as to obtain metal foam body B,
wherein the highest temperature of the thermal treatment of metal foam body AX is in the range from 680 to 715°C,
and wherein the total duration of the thermal treatment in the temperature range from 680 to 715°C is between 5 and 240 seconds.

2. Process according to Claim 1, wherein the two metallic components are present in the form of an arrangement of two superposed layers of individual metals in metal foam body A, and wherein nickel forms the inner layer and cobalt the outer layer.

3. Process according to either of Claims 1 and 2, wherein nickel and cobalt are in the form of an alloy in metal foam body A.

4. Process according to any of Claims 1 to 3, wherein the metal-containing powder MP used in step (b) comprises either
(iii) a mixture of aluminium powder and chromium powder, or
(iv) a pulverulent alloy of aluminium and chromium.

5. Process according to any of Claims 1 to 4, wherein the metal-containing powder MP used in step (b) comprises a pulverulent alloy of aluminium and chromium.

6. Process according to any of Claims 1 to 5, wherein the metal foam body A used in step (a) has been obtained by either two successive electrolytic deposition steps, in each of which an individual metallic component is deposited on a substrate, or by a single electrolytic deposition step in which two metallic components are deposited simultaneously on a substrate, wherein the substrate is removed by thermolysis after the conclusion of all electrolytic deposition steps.

7. Process according to any of Claims 1 to 6, wherein the mass ratio of the two metallic components in metal foam body A is in the range from 1:1 to 20:1,
wherein the ratio of the mass of aluminium to the mass of chromium or of molybdenum in the metal-containing powder MP is also in the range from 4:1 to 50:1,
and wherein the ratio V of the masses of metal foam body B to metal foam body A, V = m(metal foam body B) / m (metal foam body A), is in the range from 1.1:1 to 1.5:1.

8. Process according to any of Claims 1 to 7, further comprising the following step:
(d) treating the metal foam body B with a basic solution.

9. Process according to Claim 8, wherein the treatment of the metal foam body B with a basic solution is performed for a period in the range from 5 minutes to 8 hours at a temperature in the range from 20 to 120°C, and wherein the basic solution is an aqueous NaOH solution having an NaOH concentration between 2% and 30% by weight.

10. Metal foam body obtainable by a process according to any of Claims 1 to 7.

11. Metal foam body obtainable by a process according to either of Claims 8 and 9.

## Revendications

1. Procédé pour la fabrication d'un corps en mousse métallique, comprenant les étapes suivantes :
(a) mise à disposition d'un corps en mousse métallique A, qui est constitué par deux composants métalliques, ces composants métalliques pouvant se trouver soit (i) sous forme d'alliage, soit (ii) sous forme d'agencement de deux couches superposées des deux composants métalliques individuels, où, dans ce cas, un des composants métalliques forme la couche interne de la mousse métallique et l'autre composant métallique forme la couche externe de la mousse métallique,
où, dans la variante (i), les composants métalliques se trouvant sous forme d'alliage sont choisis dans la liste des combinaisons suivantes : nickel et cobalt, nickel et cuivre,
où, dans l'alternative (ii), les composants métalliques sont choisis dans la liste des combinaisons suivantes : nickel à l'intérieur et cobalt à l'extérieur, nickel à l'intérieur et cuivre à l'extérieur, fer à l'intérieur et nickel à l'extérieur et
(b) application d'une poudre contenant du métal MP sur le corps en mousse métallique A, de manière à obtenir un corps en mousse métallique AX,
la poudre contenant du métal MP étant soit un mélange de poudre d'aluminium et de poudre de chrome ou un mélange de poudre d'aluminium et de poudre de molybdène, ou un alliage sous forme de poudre soit d'aluminium et de chrome ou un alliage sous forme de poudre d'aluminium et de molybdène.
(c) traitement thermique du corps en mousse métallique AX pour obtenir une formation d'alliage entre les parts métalliques du corps en mousse métallique A et la poudre contenant du métal MP, de manière à obtenir un corps en mousse métallique B,
la température la plus élevée du traitement thermique du corps en mousse métallique AX se situant dans la plage de 680 à 715°C
et la durée totale du traitement thermique dans la plage de température de 680 à 715°C se situant entre 5 et 240 secondes.

2. Procédé selon la revendication 1, les deux composants métalliques dans le corps en mousse métallique A se trouvant sous forme de deux couches superposées de métaux individuels et le nickel formant la couche interne et le cobalt formant la couche externe.

3. Procédé selon l'une quelconque des revendications 1 à 2, le nickel et le cobalt se trouvant sous forme d'alliage dans le corps en mousse métallique A.

4. Procédé selon l'une quelconque des revendications 1 à 3, la poudre contenant du métal MP utilisée dans l'étape (b) comprenant soit
(iii) un mélange de poudre d'aluminium et de poudre de chrome, soit
(iv) un alliage sous forme de poudre d'aluminium et de chrome.

5. Procédé selon l'une quelconque des revendications 1 à 4, la poudre contenant du métal MP utilisée dans l'étape (b) comprenant un alliage sous forme de poudre d'aluminium et de chrome.

6. Procédé selon l'une quelconque des revendications 1 à 5, le corps en mousse métallique A utilisé dans l'étape (a) ayant été obtenu soit par deux étapes de dépôt galvanique successives, dans lesquelles à chaque fois un composant métallique individuel est déposé sur un substrat, soit par une seule étape de dépôt galvanique, dans laquelle deux composants métalliques sont déposés simultanément sur un substrat, le substrat étant éliminé par thermolyse après la fin de toutes les étapes de dépôt galvanique.

7. Procédé selon l'une quelconque des revendications 1 à 6, le rapport massique des deux composants métalliques dans le corps en mousse métallique A se situant dans la plage de 1:1 à 20:1,
le rapport de la masse d'aluminium à la masse de chrome ou de molybdène dans la poudre contenant du métal MP se situant dans la plage de 4:1 à 50:1
et le rapport V des masses du corps en mousse métallique B et du corps en mousse métallique A V = m(corps en mousse métallique B)/m(corps en mousse métallique A) se situant dans la plage de 1,1:1 à 1,5:1.

8. Procédé selon l'une quelconque des revendications 1 à 7, comprenant en outre l'étape suivante :
(d) traitement du corps en mousse métallique B par une solution basique.

9. Procédé selon la revendication 8, le traitement du corps en mousse métallique B par une solution basique étant réalisé pour une durée dans la plage de 5 minutes à 8 heures à une température dans la plage de 20 à 120°C et la solution basique étant une solution aqueuse de NaOH présentant une concentration en NaOH entre 2 et 30% en poids.

10. Corps en mousse métallique pouvant être obtenu selon un procédé selon l'une quelconque des revendications 1 à 7.

11. Corps en mousse métallique pouvant être obtenu selon un procédé selon l'une quelconque des revendications 8 à 9.
